# EUROPÄISCHE PATENTSCHRIFT

(11) **EP 0 999 751 B1**
(45) Veröffentlichungstag und Bekanntmachung des Hinweises auf die Patenterteilung: **27.08.2003**
(21) Anmeldenummer: 98934685.3
(22) Anmeldetag: 23.07.1998
(51) Int. Cl.: A21C 15/02

(54) **TÜTENFORMMASCHINE**
MACHINE FOR FORMING CONES
MACHINE POUR FORMER DES CORNETS

(30) Priorität: 23.07.1997 AT 124997
(43) Veröffentlichungstag der Anmeldung: 17.05.2000
(73) Patentinhaber: Franz Haas Waffelmaschinen-Industrie Aktiengesellschaft, 1210 Wien (AT); FOM - Comercio de Maquinas e Servicos LDA, Sao Pedro, Funchal, Madeira (PT)
(72) Erfinder: HAAS, Franz, Sen., A-1210 Wien (AT); HAAS, Johann, A-3400 Klosterneuburg (AT); OBERMAIER, Fritz, A-3500 Krems (AT)
(74) Vertreter: Puchberger, Rolf
(86) Internationale Anmeldenummer: AT9800178
(87) Internationale Veröffentlichungsnummer: WO99004639

(56) Entgegenhaltungen:
- US-A- 1 804 039

## Beschreibung

### Technisches Gebiet:

Die Erfindung bezieht sich auf eine Tütenformmaschine zum Herstellen von gerollten Waffeltüten aus einzelnen, im wesentlichen ebenen Waffelfladen, die aus zuckerhältigem Waffelteig hergestellt wurden und daher im warmen Zustand plastisch verformbar sind. Die Tütenformmaschine besitzt mehrere entlang einer Umlaufbahn nebeneinander angeordnet Rollwerke, in denen die Waffelfladen eingerollt und die entstandenen Tüten abkühlen gelassen werden, während die Rollwerke in einem stationären Maschinengestell von einer Eingabestation für die Waffelfladen zu einer Ausgabestation für die Waffeltüten transportiert werden.

### Stand der Technik:

Tütenformmaschinen für die Herstellung von gerollten Waffeltüten sind zumeist nahe der Ausgabestation eines kontinuierlich arbeitenden Waffelbackofens angeordnet, in dem im wesentlichen ebene, im warmen Zustand plastisch verformbare Waffelfladen aus zuckerhältigem Waffelteig hergestellt werden. Die Waffelfladen werden im noch warmen, plastisch verformbaren Zustand an die Tütenformmaschine übergeben, in der sie zu Tüten eingerollt und die entstandenen Tüten abkühlen gelassen werden.

Für die Erzeugung der Waffelfladen werden langgestreckte Waffelbacköfen eingesetzt, in denen endlose Backzangenketten umlaufen, in deren Backzangen jeweils eine aus zwei ebenen Backplatten bestehende Backform zum Erzeugen der Waffelfladen enthalten ist. Diese Waffelbacköfen besitzen ein langgestrecktes Ofengestell, das an seiner Außenseite eine aus Türen und Platten bestehende, wärmeisolierende Verkleidung trägt. Im Ofengestell ist ein langgestreckter, quaderförmiger Innenraum vorgesehen, in dem sich die endlose Backzangenkette durch zwei übereinanderliegende Transportebenen und über zwei, jeweils an einem Ende des Innenraumes angeordnete Umlenkungen erstreckt. Länge, Breite und Höhe dieses Innenraumes hängen von der Größe der im wesentlichen rechteckigen Backzangen und der Länge der Backzangenkette ab. Die Backzangen sind in ihrer Größe auf die Größe der herzustellenden Waffelfladen abgestimmt. Die Breite des Innenraumes wird hauptsächlich durch die Breite der Backzangen bestimmt. Von der Länge der Backzangen hängt der Durchmesser der Umlenkungen der Backzangenkette ab, der den vertikalen Abstand der beiden Transportstrecken und damit die Höhe des Innenraumes bestimmt. Die Länge des Innenraumes hängt von der Anzahl der Backzangen der Backzangenkette bzw. von der Länge der Backzangenkette ab. Die Höhe des Innenraumes bestimmt zusammen mit den Füssen des Ofengestelles die Lage der oberen Transportebene der Backzangenkette bzw. des Waffelbackofens.

In der obere Transportebene des Backofens sind eine Ausgabe- bzw. Waffelentnahmestation, in der die gebackenen Waffelfladen aus den geöffneten Backformen entnommen werden, und eine Teigaufgießstation, in der flüssiger Waffelteig in die leeren geöffneten Backformen eingebracht wird, in Laufrichtung der Backzangenkette hintereinander angeordnet. An die Teigaufgießstation schließt in Laufrichtung der Backzangenkette ein langer Backraum an, der erst kurz vor der Waffelentnahmestation endet und den in der unteren Transportebene liegenden Abschnitt der Backzangenkette enthält. Die Backzangenkette läuft mit konstanter Geschwindigkeit um und transportiert die geschlossenen Backzangen durch den mit langgestreckten Gasbrennern versehenen Backraum. Nach dem Verlassen des Backraumes werden die Backzangen vor der Waffelentnahmestation zum Öffnen der Backformen aufgeklappt und erst nach der Teigaufgießstation zum Schließen der Backformen wieder zugeklappt.

Während eines Umlaufes einer Backzange wird an der Teigaufgießstation eine genau dosierte Portion eines flüssigen, einen hohen Zuckergehalt aufweisenden Waffelteiges auf die untere Backplatte einer geöffneten Backform aufgegossen. Nach der Teigaufgießstation wird die Backform durch Zusammenklappen der Backzange geschlossen. Während die geschlossene Backzange den Backraum durchläuft, entsteht in ihr aus der Teigportion ein Waffelfladen, der im warmen Zustand plastisch verformbar ist. Vor der Ausgabestation wird die Backform durch Auseinanderklappen der Backzange geöffnet. An der Ausgabestation wird der Waffelfladen aus der geöffneten Backform entnommen und im plastisch verformbaren Zustand an die Tütenformmaschine übergeben, während die Backzange für die Erzeugung des nächsten Waffelfladens zur Teigaufgießstation weitertransportiert wird. Die Laufzeit der Backzange von der Teigaufgießstation durch den Backraum zur Ausgabestation entspricht der vorgegebenen Backzeit des Waffelfladens.

Die Leistungsfähigkeit des Backofens hängt hauptsächlich von der Anzahl der Backplatten ab, die die Backzangenkette mit konstanter Geschwindigkeit in der vorgegebenen Backzeit von der Teigaufgießstation durch den Backraum bis zur Ausgabestation transportiert. Die Laufgeschwindigkeit der Backzangenkette ist auf die von jeder Backzange in der vorgegebenen Backzeit von der Teigaufgießstation durch den Backraum bis zur Ausgabestation zurückzulegende Wegstrecke abgestimmt. Die in den Backzangen gebackenen Waffelfladen werden in einem vorgegebenen Arbeitstakt an der Ausgabestation aus den geöffneten Backformen entnommen.

Zur Steigerung der Leistungsfähigkeit des Backofens genügt es, die Backzangenkette um einige Backzangen zu verlängern und die Laufgeschwindigkeit der Backzangenkette zu erhöhen, damit jede Backzange die verlängerte Wegstrecke in der vorgegebenen Backzeit der Waffelfladen durchläuft. Die Verlängerung der Backzangenkette macht lediglich eine Verlängerung des Ofengestelles im Bereich des Backraumes erforderlich. Dabei wird lediglich der die Backzangenkette in sich aufnehmende, lange Innenraum verlängert. Seine Breite und Höhe bleiben dabei gleich. Ebenso die Breite und die Höhe des Ofengestelles sowie die Lage der obere Transportebene des Backofens. Eine Verlängerung von Backzangenkette und Ofengestell ist faßt unbegrenzt möglich und lediglich durch die maximale Umlaufgeschwindigkeit der Backzangenkette limitiert.

Mit diesen langgestreckten Waffelbacköfen sind Tütenformmaschinen kombiniert, bei denen ein starres, um eine stationäre Drehachse rotierendes Drehgestell mehrere, den Backformen des Waffelbackofens zugeordnete Rollwerke enthält, die vom Drehgestell in einer Kreisbahn von einer Eingabestation durch eine Arbeitsstrecke zu einer Ausgabestation transportiert werden, während in ihnen die an der Eingabestation eingezogenen, plastisch verformbaren Waffelfladen zu Tüten eingerollt und die Tüten zur Erhöhung ihrer Formstabilität abkühlen gelassen werden. Die Umlaufgeschwindigkeit des Drehgestelles ist abhängig vom Abstand der Rollwerke am Drehgestell einerseits, sowie vom Abstand der Backplatten in der Backzangenkette und deren Umlaufgeschwindigkeit anderseits. Der Durchmesser des Drehgestelles, auf dem die Rollwerke montiert sind, hängt von der Tütenproduktionszeit, die mit dem Zeitpunkt der Aufnahme des Waffelfladens in das Rollwerk beginnt und mit dem Abstreifen der ausreichend abgekühlten Tüte vom Rolldorn endet, und jener zusätzlichen Zeit ab, die für das Rückführen des Rolldornes in die Rollform erforderlich ist. In den Rollwerken werden die Waffeltüten in einer vorgegebenen Tütenproduktionszeit hergestellt, die für das Einrollen eines Waffelfladens und das anschließende Abkühlenlassen der entstandenen Tüte erforderlich ist und hauptsächlich von der Größe des Waffelfladens und der Größe der Tüte abhängt. Diese Tütenproduktionszeit bestimmt zusammen mit der Umlaufgeschwindigkeit der Backzangenkette die Länge der Arbeitsstrecke der Tütenformmaschine und damit den Durchmesser der Kreisbahn der Rollwerke bzw. die Größe des Drehgestelles, bei dem Eingabestation und Ausgabestation zumeist einander diametral gegenüberliegen.

Die Leistungsfähigkeit der Tütenformmaschine wird durch die Anzahl der im Drehgestell entlang der Arbeitsstrecke nebeneinander angeordneten Rollwerke bestimmt, die vom Drehgestell in der vorgegebenen Tütenproduktionszeit von der Eingabestation durch die Arbeitsstrecke zur Ausgabestation transportiert werden. Die Leistungsfähigkeit der Tütenformmaschine hängt daher hauptsächlich von der Größe des starren Drehgestelles ab, die auf die vorgegebene Tütenproduktionszeit und auf die durch die Laufgeschwindigkeit der Backzangenkette des Waffelbackofens vorgegebene Drehzahl des Drehgestelles abgestellt ist.

Die Größe des Drehgestelles ist auf die maximale Backzeit des jeweiligen Waffelbackofens abgestellt. Aus Kostengründen kommen der Größe des Waffelbackofens entsprechend Drehgestelle mit 8, 10, 12, 14, 16, 18 oder 20 Rollwerken zum Einsatz. Die Größe der Tütenformmaschine bzw. die Anzahl ihrer Rollwerke ist durch die Backzeit und die Anzahl der Backplatten der Backzangenkette sowie durch die erforderliche Abkühlzeit der gerollten Tüten bestimmt. Eine nachträgliche Erhöhung der Anzahl der Backplatten des Waffelbackofens ist daher in der Regel durch die Anzahl der Rollwerke der Tütenformmaschine limitiert.

Das starre Drehgestell der bekannten Tütenformmaschinen sieht zumeist zwei zur Drehachse senkrechte, kreisförmige Gestellscheiben vor, die über axiale Tragstäbe starr miteinander verbunden sind. Die Rollwerke sind im Drehgestell zwischen den beiden Gestellscheiben aufgenommen und entlang der Außenseite des Drehgestelles in gleichmäßigen Abständen nebeneinander angeordnet. Jedes Rollwerk ist mit seiner Rollachse parallel zur Mittelachse des Drehgestelles angeordnet und besitzt eine zur Rollachse koaxiale, tütenförmige Rollform mit einem seitlichen Eintrittsschlitz für die Waffelfladen. Die Rollform ist an der vorderen Gestellscheibe starr befestigt. Eine zur Rollachse koaxiale Rolldornwelle des Rollwerkes trägt an ihrem vorderen Ende einen kegelförmigen Rolldorn und an ihrem hinteren Ende Antriebsrad. Die Rolldornwelle ist in einem im Drehgestell axial verschiebbaren Schlitten drehbar, aber axial unverschieblich gelagert. Der Schlitten sitzt auf zwei zur Rollachse parallelen, an den beiden Gestellscheiben starr verankerten Führungssäulen und trägt ein nach außen vorstehendes Steuerelement. Die Steuerelemente der Schlitten greifen in stationäre Steuerkurven ein, die entlang der Außenseite des Drehgestelles vorgesehen sind und die axialen Schiebebewegungen der mit den Schlitten verbundenen Rolldorne von der Rotation des Drehgestelles ableiten. Um die Rolldorne vorübergehend in Rotation versetzen zu können, ist im Bereich der Eingabestation eine stationäre Antriebsstation mit einer stationären Antriebsvorrichtung für die Rolldorne vorgesehen, mit deren kontinuierlich umlaufenden Antriebsorgan das Antriebsrad der Rolldornwelle durch die Drehbewegung des Drehgestelles in Eingriff gebracht wird.

Während einer Rotation des Drehgestelles wird bei jedem Rollwerk zuerst der Schlitten beim Passieren der Leerstrecke und vor dem Erreichen der Eingabestation axial vorgeschoben, um den Rolldorn in die Rollform einzuführen. Beim Passieren der stationären Antriebsstation wird der in der Rollform befindliche Rolldorn für einige Umdrehungen in Rotation versetzt, während das Drehgestell das Rollwerk durch den ersten Abschnitt der Arbeitsstrecke bewegt und dabei das Antriebsrad der Rolldornwelle an dem kontinuierlich umlaufenden Antriebsorgan entlangbewegt. Der rotierende Rolldorn zieht einen, in der Eingabestation durch den seitlichen Eintrittsschlitz in die Rollform eingeführten Waffelfladen in die Rollform ein und rollt ihn zu einer Tüte ein. Während das Drehgestell das Rollwerk durch den zweiten Abschnitt der Arbeitsstrecke bewegt, wird der Schlitten axial zurückgezogen und dabei der Rolldorn samt der an ihm haftenden Waffeltüte aus der Rollform vollständig herausgezogen, damit die entstandene Tüte während des Weitertransportes des Rollwerkes außerhalb der Rollform abkühlen kann, um die Formstabilität der gerollten Waffeltüte zur erhöhen. Am Ende der Arbeitsstrecke wird der Schlitten beim Erreichen der Ausgabestation neuerlich axial verschoben, um die abgekühlte, formstabile Waffeltüte vom Rolldorn abzustreifen. Anschließend wird das Rollwerk vom Drehgestell durch die Leerstrecke transportiert und der Herstellungszyklus für die nächste Waffeltüte beginnt.

Es sind Tütenformmaschinen mit stehend angeordnetem Drehgestell bekannt, die an der Ausgabestation eines langgestreckten Waffelbackofens in dessen Ofengestell integriert sind. Das starre Drehgestell rotiert um eine an der Seitenwand des Ofengestelles angeordnete vertikale Drehachse und ragt mit seinen Gestellscheiben oberhalb der oberen Transportebene des Backofens bis zu dessen Ausgabestation. Die mit ihren Rollachsen vertikal angeordneten Rollwerke werden vom rotierenden Drehgestell entlang einer Kreisbahn bewegt, die die geradlinige horizontale Bewegungsbahn der geöffneten Backformen an der Ausgabestation des Backofens schneidet. Die geöffneten Backformen durchlaufen die Ausgabestation des Backofens mit schräg zur oberen Transportebene angeordneten, oberen Backplatten, von denen die gebackenen Waffelfladen durch die Rollformen der Rollwerke abgenommen werden. Die Rollformen sind mit Messern versehen, die ihren Eintrittsschlitzen vorgelagert sind und an den schräg stehenden, oberen Backplatten entlanggleiten. Während der Rotation des Drehgestelles werden die Waffelfladen in den Rollformen zu Tüten eingerollt und die Rolldorne zum Abkühlen der an ihnen haftenden Tüten nach oben aus den Rollformen herausgezogen und in eine angehobene Position verschoben. An der Ausgabestation werden die formstabilen Waffeltüten von den angehobenen Rolldornen gelöst und jeweils mit der Tütenspitze voran nach unten in eine schräg abfallende Transportrutsche fallen gelassen. Das Drehgestell ist unterhalb der oberen Transportebene des Waffelbackofens im stationären Maschinengestell der Tütenformmaschine drehbar gelagert.

Es sind Tütenformmaschinen mit liegend angeordnetem Drehgestell bekannt, die an der Ausgabestation eines langgestreckten Waffelbackofens neben dessen Ofengestell angeordnet sind. Das starre Drehgestell rotiert im stationären Maschinengestell der Tütenformmaschine um eine horizontale Drehachse und bewegt die mit ihren Rollachsen horizontal angeordneten Rollwerke entlang einer Kreisbahn von der, auf der Höhe der oberen Transportebene des Waffelbackofens liegenden Eingabestation zur Ausgabestation der Tütenformmaschine. Während der Rotation des Drehgestelles wird in jedem Rollwerk ein Waffelfladen zu einer Tüte eingerollt und die entstandene Tüte durch horizontales Verschieben des Rolldornes in eine Abkühlposition verschoben, in der die Tüte bis zum Erreichen der Ausgabestation abkühlt. An der Ausgabestation wird die in der Zwischenzeit formstabil gewordene Waffeltüte vom Rolldorn gelöst und nach unten aus dem Rollwerk fallen gelassen.

Zwischen dem Waffelbackofen und der Tütenformmaschine ist eine Übergabevorrichtung vorgesehen, die die plastisch verformbaren Waffelfladen von den sehr heißen Backformen des Waffelbackofens zu den deutlich kühleren Rollwerken der Tütenformmaschine transportiert und deren Arbeitstakt mit dem des Waffelbackofens und dem der Tütenformmaschine gleichgeschaltet ist.

Die Übergabevorrichtung besitzt einen, um eine vertikale Drehachse rotierenden Drehstern, der an den Enden seiner sternförmig angeordneten Arbeitsarme kleine Stempel trägt, mit denen er die Waffelfladen an deren Oberseite erfaßt und auf einer bogenförmigen, horizontalen Gleitbahn von der Ausgabestation des Waffelbackofens zur Eingabestation der Tütenformmaschine zieht. Die Stempel liegen jeweils nur mit einem sehr geringen Druck auf den Oberseiten der im plastisch verformbaren Zustand leicht verformbaren Waffelfladen auf, um die Reibung zwischen den Waffelfladen und der Gleitbahn so klein wie möglich zu halten und durch den Transport der Waffelfladen erzeugte Verformungen der Waffelfladen zu vermeiden. Die Länge der entlang einem Kreisbogen verlaufenden Gleitbahn bestimmt zusammen mit der Drehzahl des Drehsternes die für das Durchlaufen der Übergabevorrichtung erforderliche Transportzeit sowie das von dieser abhängige Ausmaß der dabei in den Waffelfladen eintretenden Veränderungen ihrer Konsistenz.

Um die plastische Verformbarkeit der bei den Rollwerken ankommenden Waffelfladen zu gewährleisten, darf die beim Durchlaufen der Übergabevorrichtung auftretende Abkühlung der Waffelfladen und die damit zwangsläufig verbundene Verringerung ihrer plastischen Verformbarkeit eine vorgegebene ober Grenze nicht überschreiten. Diese legt in Abhängigkeit von der Drehzahl des Drehsternes die maximale Länge der Gleitbahn fest. Damit wird aber auch der, von dem Radius und der Länge der Gleitbahn abhängige, maximale horizontale Abstand zwischen der Ausgabestation des Waffelbackofens und der Eingabestation der Tütenformmaschine festgelegt.

Die Gleitbahn wird von einem Leitblech gebildet, das entlang der bogenförmigen Gleitbahn horizontal verläuft. Um geringe Höhenunterschiede zwischen der Ausgabestation des Waffelbackofens und der Eingabestation der Tütenformmaschine zu überbrücken, kann das Leitblech gegenüber der Horizontalen auch geringfügig ansteigen oder abfallen. Da der Transport der Waffelfladen über ein geneigtes Leitblech höhere Anpreßdrücke der auf ihrer Oberseite aufliegenden Stempel erfordert, sind der Neigung des Leitbleches im Hinblick auf die leichte Verformbarkeit der heißen, plastisch verformbaren Waffelfladen sehr enge Grenzen gesetzt.

Es sind Tütenformmaschinen mit liegend angeordnetem Drehgestell bekannt, bei denen die Eingabestation am oberen Scheitel des Drehgestelles nahe der oberen Transportebene des Waffelbackofens angeordnet ist, während die Ausgabestation am unteren Scheitel des Drehgestelles nahe dem Boden des Aufstellungsortes des Waffelbackofens angeordnet ist. Die während der Rotation des Drehgestelles erzeugten, gerollten Waffeltüten fallen an der Ausgabestation aus der Tütenformmaschine auf eine untere Transportvorrichtung, die die gerollten Waffeltüten zu einer Kühlvorrichtung transportiert. Bei diesen Tütenformmaschinen ist die maximale Größe des Drehgestelles durch den vertikalen Abstand der unteren Transportvorrichtung von der Eingabestation der Tütenformmaschine festgelegt, die der oberen Transportebene des Waffelbackofens benachbart angeordnet ist. Der Außendurchmesser des Drehgestelles muß kleiner als die Bauhöhe des Waffelbackofens sein.

Es sind Tütenformmaschinen mit liegend angeordnetem Drehgestell bekannt, bei denen das Drehgestell um eine nahe der oberen Transportebene des Waffelbackofens gelegene horizontale Drehachse rotiert und Eingabestation und Ausgabestation ebenfalls nahe der oberen Transportebene des Waffelbackofens an den einander gegenüberliegenden, seitlichen Scheiteln des Drehgestelles angeordnet sind. Bei diesen Tütenformmaschinen ist die maximale Größe des Drehgestelles durch den vertikalen Abstand seiner, der oberen Transportebene des Waffelbackofens benachbarten Drehachse vom Boden des Aufstellungsortes festgelegt. Der Radius des Drehgestelles ist zumeist kleiner als die Bauhöhe des Waffelbackofens.

Bei den Tütenformmaschinen mit liegend angeordnetem Drehgestell ist zwar eine geringfügiger Anstieg bei der Gleitbahn der Übergabevorrichtung realisierbar, aber die dadurch bewältigbare Höhendifferenz ist sehr beschränkt, sodaß die dadurch erzielbare Vergrößerung des Drehgestelles die durch die Bauart des Waffelbackofens vorgegebene Begrenzung nur etwas hinausschiebt.

Die durch die Bauart der langgestreckten Waffelbacköfen bedingten oberen Grenzen für die Größe der Drehgestelle der zugehörigen Tütenformmaschinen werden durch jene Abmessungen des Ofengestelles bewirkt, die keinen Einfluß auf die Leistungsfähigkeit des betreffenden Waffelbackofens haben und an die durch die Größe des herzustellenden Waffelfladens vorgegebene Breite bzw. Länge der Backzangen angepaßt sind. Eine Vergrößerung dieser Abmessungen ist ohne Nachteile für den Waffelbackofen nicht möglich.

Die US 1 804 039 A zeigt eine Tütenformmaschine mit einem vielgliedrigen, bandförmigen Rollwerkträger, der entlang einer in sich geschlossenen Umlaufbahn nebeneinander angeordnete Rollwerke trägt, die an der Ausgabestation aus der Umlaufbahn herausklappbare Rollformen und in der Umlaufbahn liegende und in die in die Umlaufbahn eingeklappten Rollformen einführbare Rolldorne besitzen. Der Rollwerkträger enthält eine endlose Kette von im Maschinengestell seitlich abgestützten, horizontalen Tragstäben sowie zwei mit ihren Traggliedern jeweils eine Rollform bzw. eine Rolldorn tragende, quer zur Umlaufrichtung mit Abstand nebeneinander angeordnete Gliederketten, deren Tragglieder auf den ihre Gelenkverbindungen bildenden, horizontalen Tragstäben aufgefädelt sind. Bei jedem Rollwerk ist das seine Rollform tragende Tragglied der einen Gliederkette mit dem seinen Rolldorn tragenden Tragglied der anderen Gliederkette über zwei der horizontalen Tragstäbe verbunden, die ihrerseits in beiden Traggliedern jeweils drehbar gelagert sind. Mit der beweglichen Verbindung der Tragstäbe mit den beiden Traggliedern und mit der schwenkbaren Lagerung der Rollform in einem der beiden Tragglieder ist jeweils ein unvermeidliches Bewegungsspiel verbunden, das sich nachteilig auf die gegenseitige axiale Ausrichtung der in die Umlaufbahn zurückgeklappten Rollform und mit dem in der Umlaufbahn liegenden Rolldorn auswirkt. Der Rollwerkträger wird durch ein in seine Tragstäbe eingreifendes Kettenrad stets um nur ein Rollwerk weiterbewegt und dann für die Dauer jenes Bewegungsablaufes angehalten, der mit der Ausgabe einer fertigen Tüte bei dem in der Ausgabestation angekommenen Rollwerk verbunden ist. Bei diesem Rollwerk wird die Rollform samt der in ihr enthaltenen Tüte aus der Umlaufbahn nach oben herausgeklappt, dann wird die Tüte mit einem Greifer von oben aus der aufgerichteten Rollform entnommen und schließlich wird die leere Rollform wieder in die Umlaufbahn zurückgeklappt. Der Leistungsfähigkeit dieser Tütenformmaschine sind sehr enge Grenzen gesetzt, weil der Rollwerkträger stets für die Dauer der mit der Ausgabe einer Tüte verbundenen Bewegungsabläufe stillgesetzt werden muss. Das zwischen den Traggliedern seiner beiden Gliederketten und seinen horizontalen Tragstäben jeweils vorhandene Bewegungsspiel ist für die Beweglichkeit des bandförmigen Rollwerkträgers unerlässlich. Es beeinträchtigt aber die axiale Ausrichtung innerhalb der einzelnen Rollwerke und kann dort zu einer seitlichen bzw. winkeligen Abweichung der Rollformachse von der Rolldomachse führen. Diese anfangs geringfügigen, während des Betriebes des Rollwerkträgers mit zunehmendem Verschleiß seiner beweglichen Teile aber stets größer werdenden Abweichungen führen bei den Tüten zu einer allmählichen Abnahme ihrer Formgenauigkeit. Wenn diese einen vorgegeben Wert unterschreitet, muss dann der gesamte Rollwerkträger mit allen Rollwerken ausgetauscht werden.

### Zusammenfassung der Erfindung:

Aufgabe der Erfindung ist es eine platzsparende Anordnung der Rollwerke zu ermöglichen und die Ausgabe der gerollten Tüten zu vereinfachen.

Als Lösung wird eine Tütenformmaschine zum Herstellen von gerollten Waffeltüten aus einzelnen, im wesentlichen ebenen, gebackenen Waffelfladen vorgeschlagen, bei welcher mehrere, in einem stationären Maschinengestell entlang einer in sich geschlossenen Umlaufbahn nebeneinander angeordnete Rollwerke vorgesehen sind, in denen die Waffelfladen zwischen einer Rollform und einem Rolldom zu Tüten eingerollt werden, während die Rollwerke entlang ihrer Umlaufbahn von einer Eingabestation zum Einbringen der Waffelfladen in die Rollwerke zu einer Ausgabestation zum Ausgeben der gerollten Waffeltüten aus den Rollwerken umlaufen. Diese Tütenformmaschine ist erfindungsgemäß dadurch gekennzeichnet, dass jedes Rollwerk einen eigenen, einen Rolldorn und eine Rollform tragenden Tragrahmen besitzt, der an zwei endlosen Transportketten befestigt ist, die sich entlang der Umlaufbahn erstrecken und parallel zueinander angeordnet sind, daß der zur Rollachse koaxiale Rolldorn am vorderen Ende einer, im Tragrahmen des Rollwerkes drehbar und axial unverschieblich gelagerten Welle angeordnet ist, die über ein Antriebsrad in Rotation versetzbar ist, und daß die mit dem Rolldorn zusammenwirkende, zur Rollachse koaxiale Rollform an einem im Tragrahmen des Rollwerkes parallel zur Rollachse verfahrbaren Schlitten angeordnet ist.

Diese Ausbildung erlaubt eine kompakte Gestaltung der Rollwerke mit jeweils gegenseitig axial genau ausgerichteten Achsen von Rollform und Rolldorn verbunden mit einer beinahe unbeschränkten Vermehrung der Anzahl der Rollwerke, die nur an den beiden entsprechend verlängerten Transportketten befestigt werden müssen. Der Verschleiß der verlängerten Transportketten hat bei den an ihnen befestigten Rollwerken keine Auswirkungen auf die gegenseitig axiale Ausrichtung der Achsen von Rollform und Rolldorn. Zum Ausgeben der gerollten Tüten muss weder die Rollform verschwenkt noch der in Rotation zu versetzende Rolldorn axial verschoben werden. Der im Tragrahmen des Rollwerkes parallel zur Rollachse verfahrbare Schlitten erlaubt eine präzise Relativbewegung der Rollform gegenüber dem Rolldorn für die Ausgabe der jeweiligen Tüte.

Die erfindungsgemäße Ausbildung der Tütenformmaschine erlaubt eine der Steigerungsfähigkeit der langgestreckten Waffelbacköfen angepasste Steigerung ihrer Leistungsfähigkeit. Die zwischen der Eingabestation und der Ausgabestation liegende Arbeitsstrecke der Tütenformmaschine kann unabhängig von der Laufgeschwindigkeit der Backzangenkette des Waffelbackofens beliebig verlängert werden, um die vorgegebene Mindestzeit einzuhalten, die für die Herstellung von für den weiteren Transport ausreichend formstabilen gerollten Waffeltüten erforderlich ist.

Die Form der Umlaufbahn der Rollwerke kann den Platzverhältnissen am Aufstellungsort des Waffelbackofens angepasst werden. So kann die Lage der Ausgabestation unabhängig von der Lage der Eingabestation gewählt und der Verlauf der Umlaufbahn der Rollwerke entsprechend angepasst werden. Beispielsweise kann die Ausgabestation der Tütenformmaschine höher als die Eingabestation angeordnet werden, sodass eine der Tütenformmaschine nachgeordnete Transportvorrichtung zur Überwindung dieses Höhenunterschiedes entfallen kann.

Gemäß einem weiteren Merkmal der Erfindung können die mit den Tragrahmen der Rollwerke verbundenen Transportketten sich im stationären Maschinengestell durch zwei übereinander angeordnete Transportebenen und über zwei im Abstand voneinander angeordnete Umlenkungen erstrecken, von denen eine Umlenkung im Bereich der Eingabestation angeordnet ist. Die übereinander angeordneten Transportebenen können horizontal oder schräg zur Horizontalen angeordnet sein.

Nachstehend wird die Erfindung an Ausführungsbeispielen anhand der Zeichnungen näher erläutert.

### Kurze Beschreibung der Zeichnungen:

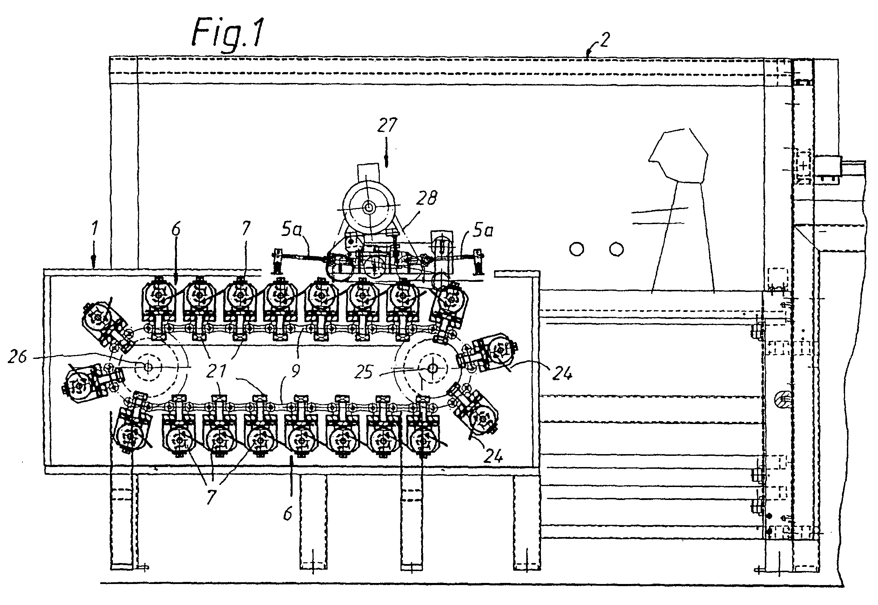

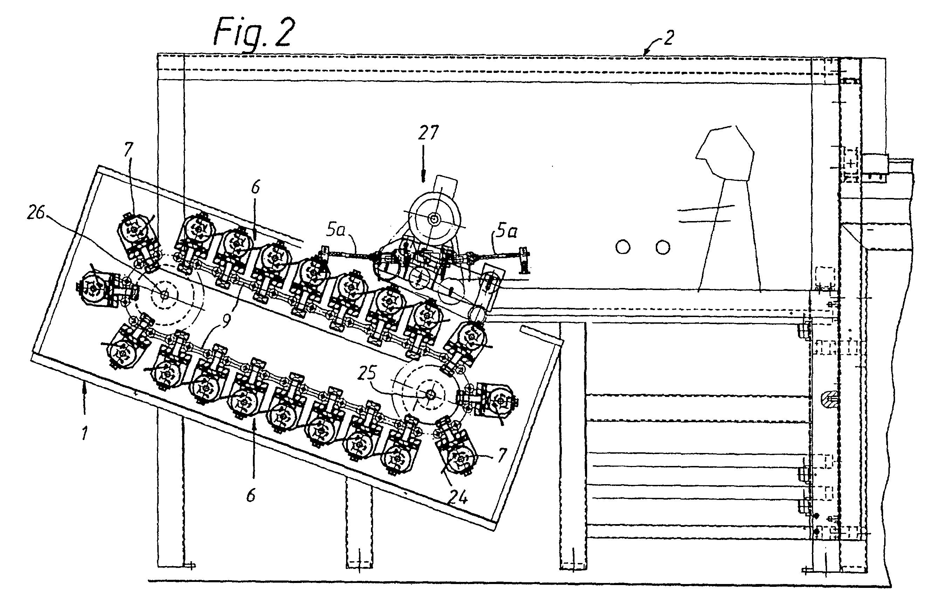

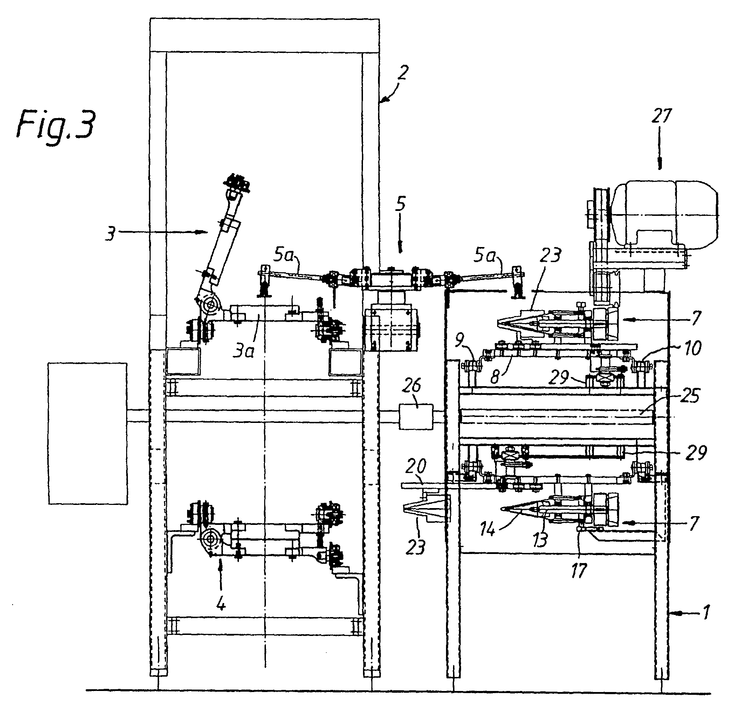

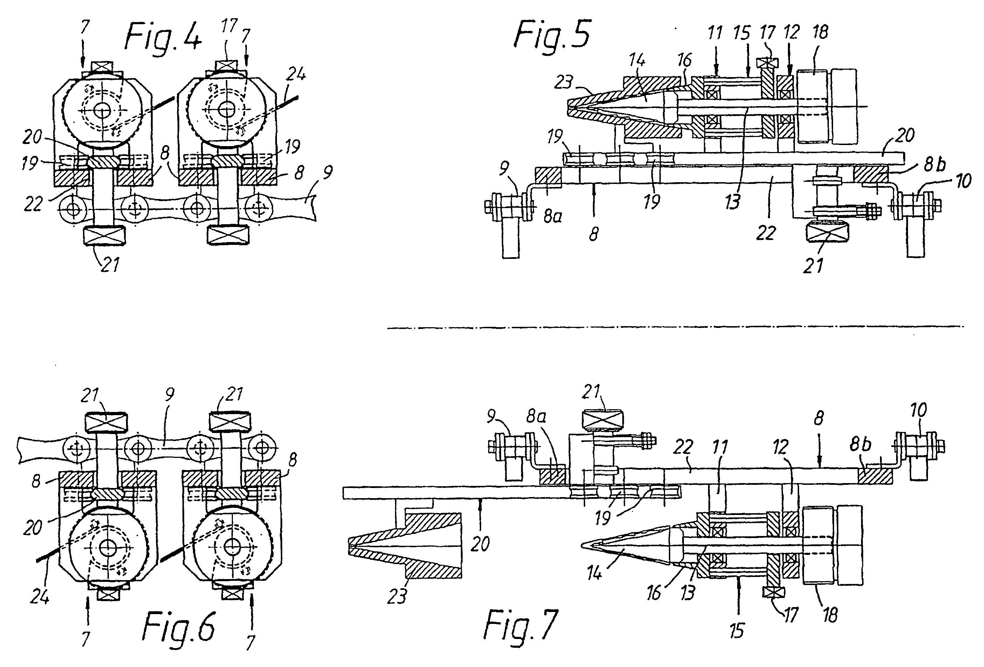

In den Zeichnungen zeigen: Fig. 1 eine Seitenansicht eines ersten Ausführungsbeispieles einer neben einem langgestreckten Waffe lbackofen angeordneten Tütenformmaschine mit horizontal angeordneten Transportebenen der Rollwerkskette, Fig. 2 eine Seitenansicht eines zweiten Ausführungsbeispieles einer neben einem langgestreckten Waffelbackofen angeordneten Tütenformmaschine mit schräg zur Horizontalen angeordneten Transportebenen der Rollwerkskette, Fig. 3 einen vertikalen Schnitt durch die Waffelentnahmestation des Waffelbackofens und durch die daneben angeordnete Eingabestation der Tütenformmaschine, Fig. 4 eine Seitenansicht eines Abschnittes der Rollwerkskette aus der oberen Transportebene der Tütenformmaschine, Fig. 5 einen vertikalen Schnitt durch die Rollwerkskette im Bereich der oberen Transportebene der Tütenformmaschine entsprechend Fig. 4, Fig. 6 eine Seitenansicht eines Abschnittes der Rollwerkskette aus der unteren Transportebene der Tütenformmaschine, und Fig. 7 einen vertikalen Schnitt durch die Rollwerkskette im Bereich der unteren Transportebene der Tütenformmaschine entsprechend Fig. 6.

### Beschreibung von Ausführungsbeispielen der Erfindung:

Fig. 1 zeigt eine langgestreckte Tütenformmaschine 1, die seitlich neben der Ausgabestation eines langgestreckten Waf-/felbackofens 2 angeordnet ist, in dem die, in den Zeichnungen nicht dargestellten, jeweils zu Tüten einzurollenden, im wesentlichen ebenen Waffelfladen einzeln aus einem flüssigen und einen hohen Anteil an Zucker aufweisenden Waffelteig hergestellt werden.

Der langgestreckte Waffelbackofen 2 enthält eine endlose, zwei übereinanderliegende horizontale Transportebenen durchlaufende Backzangenkette, deren Backzangen 3, 4 die Backformen enthalten, in denen die Waffelfladen gebacken werden. Die gebackenen Waffelfladen werden im Bereich der oberen horizontalen Transportebene der Backzangenkette an der Waffelentnahmestation des Waffelbackofens 2 aus den geöffneten Backformen der geöffneten Backzangen 3 an eine Übergabevorrichtung 5 übergeben, die die Waffelfladen im warmen, plastisch verformbaren Zustand der Eingabestation der Tütenformmaschine 1 zuführt.

Die langgestreckte Tütenformmaschine 1 enthält eine endlose, kontinuierlich umlaufende Rollwerkskette 6, die zwei übereinanderliegende Transportebenen durchläuft, die beim Ausführungsbeispiel der Fig. 1 horizontal angeordnet sind und beim Ausführungsbeispiel der Fig. 2 von der Eingabestation weg schräg nach oben ansteigen. Die gebackenen Waffelfladen werden im warmen, plastisch verformbaren Zustand einzeln den Rollwerken 7 der Rollwerkskette 6 zugeführt und in diesen zu Tüten eingerollt. Die Tüten werden abkühlen gelassen, damit sie die für knusprige Waffeln typische knusprig-spröde Konsistenz annehmen.

Die Waffelfladen werden von den unteren Backplatten 3a der geöffneten Backzangen 3 der Backzangenkette abgenommen und durch die Arme 5a der Übergabevorrichtung 5 einzeln in einem Halbkreis von der, in Fig. 3 links dargestellten, Waffelentnahmestation des Waffelbackofens 2 zu der, in Fig. 3 rechts dargestellten, Eingabestation der Tütenformmaschine 1 transportiert und dort einem Rollwerk 7 der Rollwerkskette 6 zugeführt. Die Rollwerkskette 6 der Tütenformmaschine 1 läuft gegensinnig zur Backzangenkette des Waffelbackofens 2 um.

Die Rollwerkskette 6 enthält in ihrer Umlaufrichtung hintereinander angeordnete Rollwerke 7 mit eigenem Tragrahmen 8 und zur Umlaufrichtung jeweils senkrecht angeordneter Rollachse. Der Tragrahmen 8 besitzt eine zur imaginären Rollachse des Rollwerkes 7 parallele Längsachse und ist an seinem, dem Waffelbackofen 2 zugewandten, vorderen Ende 8a mit einer endlosen, vorderen Transportkette 9 verbunden und an seinem, vom Waffelbackofen 2 abgewandten, hinteren Ende 8b mit einer endlosen, hinteren Transportkette 10. Die an den beiden Transportketten 9, 10 befestigten Tragrahmen 8 weisen mit ihren Oberseiten in der oberen Transportebene der Rollwerkskette 6 nach oben und in der unteren Transportebene der Rollwerkskette 6 nach unten.

Bei jedem Rollwerk 7 trägt der Tragrahmen 8 an seiner Oberseite zwei entlang der imaginären Rollachse des Rollwerkes hintereinander angeordnete Lager 11, 12, in denen eine Welle 13 drehbar und axial unverschieblich gelagert ist. Am vorderen Ende der Welle ist der, nahe dem vorderen Ende 8a des Tragrahmens 8 angeordnete Rolldorn 14 des Rollwerkes 7 befestigt. Im Bereich des vorderen Lagers 11 ist ein Auswerfer 15 für die eingerollten Tüten auf der Welle 13 axial verschiebbar angeordnet. Der Auswerfer 15 trägt an seinem vorderen Ende eine zur Rollachse koaxiale Hülse 16, die über das hintere Ende des Rolldornes 14 axial vorsteht. Auf der Oberseite des Auswerfers 15 ist ein Betätigungsorgan 17 befestigt, mit dessen Hilfe der Auswerfer 15 entlang der Welle 13 axial hin und her geschoben werden kann. Am hinteren Ende der Welle 13 ist ein, dem hinteren Ende 8b des Tragrahmens 8 benachbartes Antriebsrad 18 befestigt, durch das die Welle 13 samt Rolldorn 14 in Rotation versetzt werden kann.

Auf der Oberseite des Tragrahmens 8 ist weiters eine zur imaginären Rollachse parallele Schlittenführung 19 vorgesehen, in der ein Schlitten 20 parallel zur Rollachse verschiebbar geführt ist. Die Schlittenführung 19 wird von, auf beiden Seiten des Schlittens 20 jeweils hintereinander angeordneten Führungsrollen gebildet. An der Unterseite des Schlittens 20 ist nahe seinem hinteren Ende ein Betätigungsorgan 21 befestigt, mit dessen Hilfe der Schlitten 20 in der Schlittenführung 19 parallel zur Welle 13 hin und her geschoben werden kann. Das Betätigungsorgan 21 steht von der Unterseite des Schlittens 20 senkrecht zur Rollachse ab und ragt durch einen zur Rollachse parallelen Längsschlitz 22 des Tragrahmens 8 hindurch über die Unterseite des Tragrahmens 8 nach unten hinaus. Am vorderen Endabschnitt des Schlittens 20 ist die zur imaginären Rollachse koaxiale Rollform 23 befestigt, deren konische Innenseite zum Rolldorn 14 hin nach hinten offen ist. An der Außenseite der Rollform 23 ist ein zu ihrer konischen Innenseite tangentiales Leitblech 24 befestigt, das an den, in den Zeichnungen nicht dargestellten, seitlichen Einführschlitz der Rollform 23 anschließt.

Die Transportketten 9, 10 der Rollwerkskette 6 werden von vorderen Umlenkrädern, die auf einer gemeinsamen Welle 25 sitzen, von der oberen Transportebene der Rollwerkskette 6 in die untere Transportebene umgelenkt und von hinteren Umlenkrädern, die auf einer gemeinsamen Welle 26 sitzen, von der unteren Transportebene der Rollwerkskette 6 in die obere Transportebene umgelenkt. Die Tütenformmaschine 1 ist mit der vorderen Kettenumlenkung ihrer Rollwerkskette 6 seitlich neben der vorderen Kettenumlenkung der Backzangenkette des Waffelbackofens 2 angeordnet. Die die vorderen Umlenkräder der Transportketten 9, 10 tragende Welle 25 ist koaxial zu der, die vorderen Umlenkräder der Backzangenkette tragenden Welle angeordnet und mit dieser durch eine Kupplung 26 drehfest verbunden. Auf diese Weise laufen die vorderen Umlenkräder von Rollwerkskette und Backzangenkette synchron um und bewegen die Rollwerkskette 6 gegensinnig zur Backzangenkette.

Für den Antrieb der Rolldorne 14 der Rollwerke 7 ist im Bereich der Eingabestation der Tütenformmaschine eine stationäre Antriebsstation 27 vorgesehen, an der die Rollwerke 7 bei umlaufender Rollwerkskette mit den Antriebsrädern 18 ihrer Wellen 13 vorbeilaufen. Die Antriebsstation 27 ist mit einem kontinuierlich umlaufenden, bandförmigen Antriebsorgan 28 versehen, von dem sich ein Abschnitt parallel zu der bei umlaufender Rollwerkskette 6 von den Antriebsräder 18 der Rollwerke 7 durchlaufenen Bahn erstreckt. Wenn die umlaufenden Rollwerke 7 die Antriebsstation 27 passieren, kommen die auf den Wellen 13 sitzenden Antriebsräder 18 der Rollwerke 7 mit dem Antriebsorgan 28 der Antriebsstation 27 in Eingriff und die Wellen 13 und die Rolldorne 14 werden für die Dauer des Eingriffes in Rotation versetzt.

Zum Einrollen eines Waffelfladens wird der Schlitten 20 des Rollwerkes 7 mittels seines Betätigungsorganes 21 in seine hintere Stellung verschoben (Fig. 5). Dabei wird die Rollform 23 von vorne auf den Rolldorn 14 aufgeschoben, wobei zwischen der konischen Innenseite der Rollform 23 und der konischen Außenseite des Rolldornes 14 ein Spalt bleibt. Der Waffelfladen wird über das Leitblech 24 durch den Einführschlitz der Rollform 23 hindurch in diesen Spalt eingeführt und von dem durch das Antriebsorgan 28 der Antriebsstation 27 über sein Antriebsrad 18 in Rotation versetzten Rolldorn 14 um den Rolldorn 14 herum zu einer Tüte eingerollt. Anschließend wird der Schlitten 20 mittels seines Betätigungsorganes 21 in seine vordere Stellung verschoben (Fig. 7). Dabei wird die Rollform 23 vom Rolldorn 14, auf dem die Tüte zurückbleibt, nach vorne abgezogen und vom Rolldorn 14 so weit entfernt, daß die Tüte zwischen Rollform 23 und Rolldorn 14 ungehindert passieren kann. Anschließend wird der Auswerfer 15 mittels seines Betätigungsorganes 17 in seine vordere Stellung verschoben und dadurch die Tüte vom Rolldorn 14 abgestreift. Während das Rollwerk 7 durch die Rollwerkskette 6 von der Ausgabestation der Tütenformmaschine 1 zurück zur Eingabestation transportiert wird, wird der Auswerfer 15 über an seinem Betätigungsorgan 17 angreifende stationäre Führungen der Tütenformmaschine zurück in seine hintere Ausgangsstellung verschoben. Gleichzeitig wird der die Rollform 23 tragende Schlitten 21 über an seinem Betätigungsorgan 22 angreifende, stationäre Führungen 29 der Tütenformmaschine zurück in seine hintere Stellung verschoben.

## Patentansprüche

1. Tütenformmaschine (1) zum Herstellen von gerollten Waffeltüten aus einzelnen, im wesentlichen ebenen, gebackenen Waffelfladen, bei welcher mehrere, in einem stationären Maschinengestell entlang einer in sich geschlossenen Umlaufbahn nebeneinander angeordnete Rollwerke (7) vorgesehen sind, in denen die Waffelfladen zwischen einer Rollform (23) und einem Rolldom (14) zu Tüten eingerollt werden, während die Rollwerke (7) entlang ihrer Umlaufbahn von einer Eingabestation zum Einbringen der Waffelfladen in die Rollwerke (7) zu einer Ausgabestation zum Ausgeben der gerollten Waffeltüten aus den Rollwerken (7) umlaufen, **dadurch gekennzeichnet, daß** jedes Rollwerk (7) einen eigenen, einen Rolldom (14) und eine Rollform (23) tragenden Tragrahmen (8) besitzt, der an zwei endlosen Transportketten (9, 10) befestigt ist, die sich entlang der Umlaufbahn erstrecken und parallel zueinander angeordnet sind, daß der zur Rollachse koaxiale Rolldorn (14) am vorderen Ende einer, im Tragrahmen (8) des Rollwerkes (7) drehbar und axial unverschieblich gelagerten Welle (13) angeordnet ist, die über ein Antriebsrad (18) in Rotation versetzbar ist, und daß die mit dem Rolldorn (14) zusammenwirkende, zur Rollachse koaxiale Rollform (23) an einem im Tragrahmen (8) des Rollwerkes (7) parallel zur Rollachse verfahrbaren Schlitten (20) angeordnet ist.

2. Maschine nach Anspruch 1, **dadurch gekennzeichnet, daß** die mit den Tragrahmen (8) der Rollwerke (7) verbundenen Transportketten (9, 10) sich im stationären Maschinengestell durch zwei übereinander angeordnete Transportebenen und über zwei im Abstand voneinander angeordnete Umlenkungen erstrecken, von denen eine Umlenkung im Bereich der Eingabestation angeordnet ist.

## Claims

1. Cornet-forming machine (1) for the production of rolled wafer cornets from individual, substantially flat, baked wafer biscuits, in which machine a plurality of rolling units (7) are arranged side by side in a stationary machine frame along an inherently closed circulation path, the wafer biscuits being rolled up in the rolling units between a roll mould (23) and a roll mandrel (14) to form cornets, while the rolling units (7) move along their circulatory path from an input station for introduction of the wafer biscuits into the rolling units (7) to an output station for discharge of the rolled wafer cornets from the rolling units (7), **characterised in that** each rolling mechanism (7) has its own supporting frame (8) carrying a roll mandrel (14) and a roll mould (23), the supporting frame being secured to two continuous transport chains (9, 10) that extend along the circulatory path and are arranged parallel to one another, **in that** the roll mandrel (14) coaxial with the rolling axis is arranged at the leading end of a shaft (13) mounted rotatably and axially fixed in the supporting frame (8) of the rolling mechanism (7), which shaft is caused to rotate by way of a drive wheel (18), and **in that** the roll mould (23) coaxial with the rolling axis and co-operating with the roll mandrel (14) is arranged on a carriage (20) movable in the supporting frame (8) of the rolling mechanism (78) parallel to the rolling axis.

2. Machine according to claim 1, **characterised in that** the transport chains (9, 10) connected to the supporting frame (8) of the rolling units (7) extend in the stationary machine frame through two superimposed transport planes and over two guide means arranged spaced from one another, one guide means being arranged in the region of the input station.

## Revendications

1. Machine (1) pour former des cornets pour fabriquer des cornets enroulés en gauffre à partir de galettes de gauffre cuites sensiblement planes, dans laquelle il est prévu plusieurs outils (7) de roulage, qui sont disposés dans un bâti fixe de machine côte à côte le long d'une voie de circulation en soi fermée et dans lesquels les galettes de gauffre sont enroulées entre un moule (23) de roulage et un mandrin (14) de roulage en des cornets, tandis que les outils (7) de roulage tournent le long de leur voie de circulation d'un poste d'entrée pour l'introduction des galettes de gauffre dans les outils (7) de roulage à un poste de sortie pour faire sortir les cornets de gauffre enroulés des outils (7) de roulage, **caractérisée en ce que** chaque outil (7) de roulage a un cadre (8) porteur propre portant un mandrin (14) de roulage et un moule (23) de roulage et fixé à deux chaînes (9, 10) sans fin de transport qui s'étendent le long de la voie de circulation et qui sont disposées parallèlement entre elles, **en ce que** le mandrin (14) de roulage coaxial à l'axe de roulage est monté à l'extrémité avant d'un arbre (13) monté toumant et sans possibilité de coulissement axial dans le cadre (8) porteur de l'outil (7) de roulage, arbre qui peut être mis en rotation par un pignon (8) d'entraînement, et **en ce que** le moule (23) de roulage coaxial à l'axe de roulage et coopérant avec le mandrin (14) de roulage est placé sur un chariot (20) mobile parallèlement à l'axe de roulage dans le cadre (8) porteur de l'outil (7) de roulage.

2. Machine suivant la revendication 1, **caractérisée en ce que** les chaînes (9, 10) de transport reliées au cadre (8) porteur des outils (7) de roulage s'étendent dans le bâti fixe de la machine sur deux plans de transport superposés et par deux renvois disposés à distance l'un de l'autre, l'un des renvois étant placé dans la région du poste d'entrée.
